**Europäisches Patentamt**

**European Patent Office**

**Office européen des brevets**

(19)

(11) Publication number : **0 079 712 B2**

(12) **NEW EUROPEAN PATENT SPECIFICATION**

(45) Date of publication of the new patent
specification : **06.10.93 Bulletin 93/40**

(21) Application number : **82305772.4**

(22) Date of filing : **29.10.82**

(51) Int. Cl.⁵ : **C11D 17/04, C11D 3/37**

(54) **Borate solution soluble polyvinyl alcohol films.**

The file contains technical information
submitted after the application was filed and
not included in this specification

(30) Priority : **10.11.81 US 319966**

(43) Date of publication of application :
**25.05.83 Bulletin 83/21**

(45) Publication of the grant of the patent :
**08.06.88 Bulletin 88/23**

(45) Mention of the opposition decision :
**06.10.93 Bulletin 93/40**

(84) Designated Contracting States :
**AT BE CH DE FR GB IT LI LU NL SE**

(56) References cited :
**EP-A- 0 011 502**
**DE-A- 2 919 886**
**GB-A- 1 347 212**
**GB-A- 2 090 603**
**US-A- 3 148 166**
**US-A- 3 240 712**

(56) References cited :
**US-A- 3 300 546**
**US-A- 3 528 921**
**US-A- 3 632 786**
**US-A- 3 634 295**
**US-A- 3 892 905**
**US-A- 4 082 678**
**US-A- 4 115 292**
**Fette, Seifen, Anstrichmittel, 63 (1961), pp.
855-861**

(73) Proprietor : **The Clorox Company**
**1221 Broadway**
**Oakland California 94612 (US)**

(72) Inventor : **Kaufmann, Edward J.**
**3171 Lansdown Court**
**Pleasanton California 94566 (US)**
Inventor : **Sudbury, Barry A.**
**650 Claret Court**
**Pleasanton California 94566 (US)**

(74) Representative : **Lawrence, Malcolm Graham
et al**
**Hepworth, Lawrence & Bryer 2nd Floor, Gate
House South Westgate Road
Harlow Essex CM20 1JN (GB)**

**EP 0 079 712 B2**

Jouve, 18, rue Saint-Denis, 75001 PARIS

## Description

The invention relates to laundry additive combinations in which polyvinyl alcohol films in the form of envelopes contain laundry additives such as detergents and the like.

Several film materials are available which are water soluble and which can be formed into envelopes in which premeasured amounts of laundry additives can be sealed. Methyl cellulose, polyethylene oxide and polyvinyl alcohol are particularly useful film materials of this nature. Methyl cellulose films generally do not have sufficient solubility at higher water temperatures. Polyethylene oxide films tend to absorb moisture too readily and become tacky.

Polyvinyl alcohol films do not have the problems of methyl cellulose or polyethylene oxide films. However, when these films are placed in solutions containing borate at levels and pHs frequently encountered in laundry applications, the rate of solubility of such films is severely reduced. Yet, borate is often present in clothes washing liquors and the like, since one of the most widely used bleaching compositions is principally sodium perborate, which forms borate ions in solution. Other borate sources such as borax, are also used as laundry additives.

The present invention is directed to overcoming the problem of slow dissolution rates of polyvinyl alcohol films in borate-containing solutions, as set forth above, which contain borate at levels and pHs normally encountered in laundry applications.

In accordance with the present invention, a laundry additive combination comprises a laundry additive for discharge to a borate ion-containing wash medium; and a sealed envelope containing said additive, said envelope being formed of a film comprising a polyvinyl alcohol, a derivative thereof or a water-soluble copolymer of vinyl alcohol, said film being plasticized and incorporating a solubilizer as defined in claim 1 which interacts with the borate ions of the borate ion-containing wash medium to impede the insolubilizing effects of said borate ions on said polyvinyl alcohol, derivatives thereof or vinyl alchol copolymer. The film composition is selected such that in an aqueous solution having a borate concentration of $1.7 \times 10^{-3}$M and a pH of 10.7, 50% or more, by volume of a 1.5 cm×1.5 cm×0.0038 cm piece of said film, when agitated in 750 ml of said solution, in a cylindrical container 9.5 cm in diameter using an oblong magnetic stirring bar about 1 cm × 5 cm at a speed sufficient to cause a vortex to extend about 20% of the way downwardly from a top surface of the solution, has dissolved or dispersed in 300 seconds at 37.5°C.

Except where the context indicates otherwise, the term polyvinyl alcohol (PVA) as used herein is meant to include, as already noted, the polyvinyl alcohol itself, derivatives thereof, and its water-soluble copolymers. The polyvinyl alcohol resins described herein are generally produced by the hydrolysis of polyvinyl acetate and generally have a degree of hydrolysis between about 70% and about 98%.

It is well known that envelopes made of polyvinyl alcohol films can be used to enclose premeasured amounts of laundry additives such as detergents, bleaches, brighteners, builders, fabric softeners, and the like. Such polyvinyl alcohol films are generally formed from polyvinyl alcohol resins of a desired degree of hydrolysis. In practice, the polyvinyl alcohol is dissolved in water, with heating, and one or another conventional plasticizers, such as, for example, polyethylene glycol having a molecular weight of 200 to 600, release agents, and an anti-blocking agent, if desired, are also dissolved in the same solution. Thereafter, the solution is simply cast and the water evaporated to produce a film with the desired physical properties.

The conventional polyvinyl alcohol films of the prior art have very adequate solubility in water. However, when there is a significant borate concentration in the water and when the pH is that frequently encountered in washing liquors, such polyvinyl alcohol films will not dissolve sufficiently readily to deliver a laundry additive to the solution early in the wash cycle.

An objective test, which simulates results found for top loading automatic washing machines, has been developed for determining when a polyvinyl alcohol film will have sufficient solubility in borate containing solutions so as to be readily soluble under normal laundry conditions. Acceptable solubility rate is demonstrated when at least 50% by volume of a 1.5 cm×1.5 cm×0.0038 cm sample of the film substantially dissolves or disperses within 300 seconds, as determined by visual evaluation, in a mildly agitated aqueous solution having a borate concentration of $1.7 \times 10^{-3}$M and having a pH of 10.7 at a temperature of 37.5°C. Mild agitation is defined, for the purposes of the test, as agitation in a volume of 750 cc of the solution in a cylindrical container 9.5 cm in diameter using an oblong magnetic stirring rod about 1 cm×5 cm at a speed sufficient to cause a vortex to extend about 20% of the way downwardly from the surface of the solution.

It has been discovered that when the film has a certain composition, as specified hereinafter or any mixture of such compositions in sufficient quantities, a film results which satisfies the above-set-out test and is acceptable for laundry use.

The first solubilizer for use in the envelopes in which the detergent or other laundry additive is contained is a polyhydroxy compound (PHC) which has a binding constant with borate in aqueous solutions ($K_2$) as de-

fined by the equation

$$K_2 = \frac{(\text{Complex})}{(\text{borate}) (\text{PHC})^2}$$

that is greater than about 800M$^{-2}$ at 250°C; the constituents concentrations being in moles per liter. Particularly useful polyhydroxy compounds are levulose (fructose), mannitol, catechol, sorbitol, sorbose, pentaerythritol and meso-erythritol. In general the higher the binding constant, the more effective the polyhydroxy compound in providing the desired solubility characteristics. It is somewhat surprising that significant quantities of the polyhydroxy compound can be incorporated into the polyvinyl alcohol without rendering envelopes made from the film unfit for long term storage and laundry use.

If the polyhydroxy compound is utilized by itself to solubilize the polyvinyl alcohol film, it is preferably present in an amount of at least about 10%, by weight, of the polyvinyl alcohol film, the effective amount depending on the identity of the polyhydroxy compound. On the other hand, lesser amounts of the polyhydroxy compound can be utilized if the film includes a polyvinyl alcohol having a relatively lower molecular weight, for example, a number average molecular weight below about 50,000, or if the film includes an acid as will be set out below.

The second solubilizer is an organic, inorganic or polymeric acid having an acid dissociation constant, in water at 25°C, greater than about 10$^{-9}$M and preferably greater than about 10$^{-6}$M. Polyacrylic acids with average molecular weights in the range from about 3000 to about 150,000 are very useful acids for such purposes. Other acids are also useful, for example, citric acid, succinic acid, tartaric acid, adipic acid, cysteine, glutamic acid, benzoic acid and oxalic acid. It should be noted that when the acid is utilized by itself, it is preferred that it be in concentration of at least about 10%, by weight, based on the weight of the polyvinyl alcohol film. The amount of acid can be reduced if some polyhydroxy compound, as set out above, is present and/or if the film includes polyvinyl alcohol having a number average molecular weight below abut 50,000 and more preferably below about 25,000.

The film may, of course, comprise a mixture of the two PVA compositions referred to, i.e. a mixture comprising the PHC-containing PVA and also the polymeric acid-containing PVA.

PVA films produced from polyvinyl alcohol resins characterized by a number average molecular weight below about 50,000, have somewhat improved solubility qualities in borate ion environments and are preferably present as at least part of the PVA resin component of the film compositions referred to herein. Such PVA is preferably of number average molecular weight below about 25,000, and more preferably of about 10,000. At least about 50% of the polyvinyl alcohol resin on which the film is based will preferably consist of a polyvinyl alcohol of such an average molecular weight, more preferably at least about 80% and still more preferably about 100%. Somewhat unexpectedly, such low molecular weight polyvinyl alcohol resins produce films of sufficient strength, stability in humid weather, and integrity for storage and laundry use.

It is essential, in any case, that the polyvinyl alcohol film, in accordance with the present invention, be capable of satisfying the objective test of solubility in a borate containing solution and at a pH as set out above.

Additionally, the PVA is plasticized. It is known from US Patent N° 3892905 that sorbitol, referred to hereinbefore as useful as a solubilizer in accordance with the present invention, has been proposed for use as a plasticizer for a film made of a mixture of PVA and PVP. In the present invention, the PVA is plastizized apart from the presence of the solubilizer.

When envelopes are made from the films, such films will generally be about 0.038 mm (1.5 mils) thick. This provides an envelope of sufficient strength which will dissolve sufficiently quickly in normal laundry use. However, film thicknesses of from about 0.025 to 0.089 mm (1.0 to 3.5 mils) are practical for the application described herein.

It should be noted that not only may detergents be enclosed in envelopes in accordance with the present invention, but also builders, bleaches, brighteners, fabric softeners, anti-soiling polymers and other laundry additives may be so enclosed, provided they do not dissolve or otherwise interact deleteriously with the film material.

The invention will be better understood by reference to the following examples:

Examples 1-5

20.1 g of polyvinyl alcohol (number average molecular weight≃10,000. 88% hydrolyzed) was added slowly with mixing to 8.6 g of polyethylene glycol (average molecular weight≃200) and 86.4 g of distilled water. After the polyvinyl alcohol was dispersed, the dispersion was heated for approximately two hours at 60°C to completely dissolve the polyvinyl alcohol. The solution was cooled to 23°C, stirred slowly to remove air bubbles and cast on a glass plate using a film applicator with an 0.051 cm clearance.

The resulting film was dried at room temperature for 1-2 hours, dried further at 37.5°C for 2 hours and allowed to equilibrate to room temperature conditions (≃23°C, 50% relative humidity) before being removed from

EP 0 079 712 B2

the glass plate for testing. This procedure yielded a film 0.0038 cm thick containing approximately 66% polyvinyl alcohol, 28% polyethylene glycol and 6% water. Using the evaluation procedure as set out above, >95% of the film dissolved in 150 seconds. In this procedure borax was added as the source of borate and sodium carbonate and sodium bicarbonate were used to maintain the pH at 10.7. Using a similar procedure, additional films 0.0038 cm in thickness with different number average molecular weight polyvinyl alcohol resins were prepared and evaluated and the results are summarized in Table I.

TABLE I

| | Polyvinyl alcohol | | % Film dissolved/dispersed | | |
|---|---|---|---|---|---|
| Example | Number average MW | % Hydrolysis | 30 s | 150 s | 300 s |
| 1 | 10,000 | 88 | 95 | >95 | >95 |
| 2 | 26,000 | 88 | 85 | >95 | >95 |
| 3 | 49,000 | 88 | <10 | <10 | 60 |
| 4 | 78,000 | 88 | <10 | <10 | <10 |
| 5 | 96,000 | 88 | <10 | <10 | <10 |

These examples demonstrated that a polyvinyl alcohol resin of a number average molecular weight of about 50,000 or less provides a film that exhibits some improvement in solubility criteria even in the absence of any polyhydroxy compound or acid as required according to the present invention. The 60% dissolved/dispersed result at 300 second for 50,000 molecular weight polyvinyl alcohol is somewhat low but is quite sufficient for normal laundry use.

Examples 6-15

12.9 g of polyvinyl alcohol (average molecular weight≃96,000, 88% hydrolyzed) was added slowly with mixing to 0.4 g of polyethylene glycol (average molecular weight≃200) and 81.6 g of distilled water. After the polyvinyl alcohol was dispersed, the dispersion was heated for approximately two hours at 60°C to completely dissolve the polyvinyl alcohol. The solution was cooled to approximately 30°C and a slurry of 5.1 g of fructose in 15 g of distilled water was added with mixing. The viscous mixture was stirred for 16 hours at 23°C to insure complete mixing and to remove any air bubbles. It was then cast on a glass plate using a film applicator with an 0.051 cm clearance.

The resulting film was dried at room temperature for 1-2 hours, dried further at 37.5°C for 2 hours and allowed to equilibrate to room temperature conditions (≃23°C, 50% relative humidity) before being removed from the glass plate for testing. This procedure yielded a film 0.0038 cm thick containing approximately 66% polyvinyl alcohol (number average molecular weight≃96,000, 88% hydrolyzed), 2% polyethylene glycol (number average molecular weight≃200), 26% fructose and 6% water. Using the evaluation procedure as set out above, 70% of the film dissolved in 300 seconds.

Using a similar procedure, additional films of a thickness of approximately 0.0038 cm with different polyhydroxy compounds at levels of approximately 26% by weight were prepared and evaluated. The polyvinyl alcohol used in these examples was 88% hydrolyzed and had a number average molecular weight of approximately 96,000. Table II presents the results of testing such films.

4

TABLE II

| Example | Polyhydroxy compound | $K_2$ | % Film dissolved/dispersed | | |
|---|---|---|---|---|---|
| | | | 30 s | 150 s | 300 s |
| 5 | (None) | | <10 | <10 | <10 |
| 6 | Fructose | 98,500 | 25 | 50 | 70 |
| 7 | Mannitol | 88,500 | 80 | 90 | 95 |
| 8 | Catechol | 14,200 | 40 | 50 | 70 |
| 9 | Pentaerythritol | 1,110 | 40 | 50 | 70 |
| 10 | Glucose | 770 | <10 | <10 | 15 |
| 11 | Arabinose | 675 | <10 | <10 | 10 |
| 12 | Galactose | 298 | <10 | <10 | 10 |
| 13 | Sorbitol | not known | 40 | 60 | 80 |
| 14 | Sorbose | not known | 30 | 50 | 75 |
| 15 | Meso-erythritol | not known | <10 | <10 | 50 |

These examples demonstrate that polyhydroxy compounds should have $K_2$ values greater than about 800M$^{-2}$ to provide a film that meets desired solubility criteria. Furthermore, a polyvinyl alcohol film of number average molecular weight greater than 50,000 has been shown to be rapidly soluble due to the inclusion of these polyhydroxy compounds having $K_2$ greater than 800. Thus, polyvinyl alcohol resins of as much as 200,000 number average molecular weight are expected to be rendered rapidly soluble by the correct choice of polyhydroxy compounds and its level in the film.

Examples 16-25

12.9 g of polyvinyl alcohol (number average molecular weight≃96,000, 88% hydrolyzed) was added slowly with mixing to 0.9 g of polyethylene glycol (average molecular weight≃200), 4.6 g of polyacrylic acid (average molecular weight=5,000) and 96.6 g of deionized water. After the polyvinyl alcohol was dispersed, the dispersion was heated for approximately two hours at 60°C to dissolve the polyvinyl alcohol. The solution was cooled at 23°C, stirred slowly to remove air bubbles and cast on a glass plate using a film applicator with an 0.051 cm clearance. The resulting film was dried at room temperature for 1-2 hours, dried further at 37.5°C for 2 hours and allowed to equilibrate at room temperature conditions (≃23°C, 50% relative humidity) before being removed from the glass plate for testing. This procedure yielded a film 0.0038 cm thick containing approximately 66% polyvinyl alcohol, 24% polyacrylic acid, 5% polyethylene glycol and 5% water. Using the evaluation procedure as set out above, >95% of the film dissolved in 150 seconds.

Using a similar procedure additional films, approximately 0.0038 cm thick, containing other acids at levels of approximately 24% by weight were prepared and evaluated. These films contained polyvinyl alcohol, 88% hydrolyzed, and with a number average molecular weight of approximately 96,000. The results are summarized in Table III.

TABLE III

| Example | Acid | $K_a(M)$ | % Film dissolved/dispersed | | |
|---|---|---|---|---|---|
| | | | 30 s | 150 s | 300 s |
| 16 | Polyacrylic | $10^{-5}$ | 90 | >95 | >95 |
| 17 | Oxalic | $6\times10^{-2}$, $6\times10^{-5}$ | <10 | 90 | >95 |
| 18 | Glutamic | $7\times10^{-3}$, $5\times10^{-5}$ | 30 | 40 | 80 |
| 19 | Tartaric | $1\times10^{-3}$, $5\times10^{-5}$ | 40 | 60 | 85 |
| 20 | Citric | $8\times10^{-4}$, $1.8\times10^{-5}$, $4\times10^{-6}$ | 60 | 75 | 90 |
| 21 | Succinic | $7\times10^{-5}$, $2\times10^{-6}$ | 40 | 40 | 70 |
| 22 | Benzoic | $6\times10^{-5}$ | 15 | 25 | 70 |
| 23 | Adipic | $4\times10^{-5}$ | 60 | 70 | 95 |
| 24 | Cysteine | $7\times10^{-9}$ | 20 | 30 | 50 |
| 25 | Sodium Tartrate | $<10^{-9}$ | <10 | <10 | <10 |

These examples demonstrate that acids must have $K_a$ values greater than $10^{-9}$M to provide a film that meets desired solubility criteria. Furthermore, a polyvinyl alcohol film of number average molecular weight greater than 50,000 has been shown to be rendered rapidly soluble due to the inclusion of these acidic components having $K_a > 10^{-9}$. Thus films based on polyvinyl alcohol resins of as much as 200,000 number average molecular weight are expected to be rapidly soluble by the correct choice of acidic compound and its level in the film.

Example 26

Using procedures similar to those described in the previous examples, a film combining the use of low molecular weight (<50000) PVA and a polyhydroxy compound was made and evaluated. The procedure yielded a film approximately 0.0038 cm thick with a composition of approximately 81% polyvinyl alcohol (88% hydrolyzed, number average molecular weight approximately 25,000), 14% mannitol and 5% water. This film combines the use of a polyvinyl alcohol resin with a number average molecular weight less than 50,000 and a polyhydroxy compound with a binding constant with borate that is greater than 800M$^{-2}$. The film was evaluated using the procedures set forth previously and it was found that >95% of the film by volume, dissolved or dispersed, as determined by visual examination, in 30 seconds under the test conditions set forth previously. This represents an improvement over Examples 2 and 7 and although both previous examples set forth films that met solubility criteria, this example indicates that combinations of the features yield films with still better solubility characteristics.

Better solubility characteristics can become important when the laundry additive combination comprising a laundry additive and an envelope made from a film as set forth herein is used in extreme or misuse conditions. For example, it is not uncommon for the consumer to use more than the recommended amount of bleaching compositions containing sodium perborate when laundering a heavily soiled load or in small volumes of washing liquor. Such would result in a concentration of borate as high as $3.4\times10^{-3}$M or even higher in the laundry liquor. Also, it is not uncommon for the consumer to launder delicate items at temperatures significantly less than 37.5°C. Both conditions can have the effect of reducing the solubility rate of films that meet the criteria set forth previously herein.

Examples 27 and 28

Using procedures similar to those described in the previous examples, two additional films were produced at a thickness of approximately 0.0079 cm. The solubility rates of the two films were evaluated under conditions identical to those set forth previously herein with the exception that the borate concentration was maintained

at $3.4 \times 10^{-3}$M and that the temperature was maintained at 23°C. The results appear in Table IV.

TABLE IV
Film composition

| Example | % PVA 88% hydrolyzed; number average MW≈10,000 | % Fructose | % Polyethylene MW≈200 | % $H_2O$ | % Dissolved/ dispersed | |
|---|---|---|---|---|---|---|
| | | | | | 30 s | 300 s |
| 27 | 75 | 0 | 19 | 6 | <10 | 60 |
| 28 | 75 | 19 | 0 | 6 | >95 | >95 |

Thus, although the film presented in Example 27 (low molecular weight PVA resin), has an acceptable solubility rate under the conditions set forth in this example, the solubility rate is relatively low. However, by the use of polyvinyl alcohol resins with number average molecular weight of about 50,000 or less, and the use of a polyhydroxy compound which has a binding constant with borate above about $800M^{-2}$, a film is produced with a solubility rate considerably higher and more acceptable than that of Example 27. Thus, significant advantage over separate use of the individual embodiments is achieved. It can be expected that combinations of any two or more of low MW PVA resin, PHA solubilizer and polyhydroxy compound solubilizer will yield films that readily meet solubility criteria set forth previously.

The present invention is directed to and discloses both a polyvinyl alcohol film and a laundry additive-envelope combination with the film being of proper solubility rate in borate containing solutions under normal laundry conditions so as to deliver the contents of an envelope made of the film early during a wash cycle, even when borate is present.

## Claims

1. A laundry additive combination comprising a laundry additive for discharge to a borate ion-containing wash medium and a sealed envelope containing said additive, said envelope being formed of a polymer film as defined below:-

   (a) a polyvinyl alcohol film, a film of a derivative of polyvinyl alcohol or a film of a water soluble copolymer of vinyl alcohol, the polymer being plasticized apart from the presence of the solubilizer defined below, and containing as solubilizer a polyhydroxy compound, PHC, that has a binding constant, $K_2$, with borate, in aqueous solution at 25°C, that is greater than about 800 $M^{-2}$, $K_2$ being defined as equal to:

   $$\frac{(Complex)}{(borate)(PHC)^2}$$

   wherein (Complex), (borate) and (PHC) are the molar concentrations of the respective constituents; or

   (b) a polyvinyl alcohol film, a film of a derivative of polyvinyl alcohol or a film of a water-soluble copolymer of vinyl alcohol, the polymer being plasticized and containing as solubilizer an acid having an acid dissociation constant, in water at 25°C, greater than about $10^{-9}$M;

   the composition of said film being selected such that 50% or more, by volume, of a 1.5cm x 1.5cm x 0.0038cm piece of said film, when agitated in a volume of 750ml of a solution having a borate concentration of $1.7 \times 10^{-3}$M and having a pH of 10.7 in a cylindrical container 9.5cm in diameter, using an oblong magnetic stirring bar about 1cm x 5cm at a speed sufficient to cause a vortex to extend about 20% of the way downwardly from a top surface of the solution has dissolved or dispersed in 300 seconds at a temperature of 37.5°C.

2. A laundry additive combination as claimed in Claim 1, and containing as said polyhydroxy compound, fructose, sorbitol, mannitol, sorbose, catechol, pentaerythritol or mesoerythritol.

3. A laundry additive combination as claimed in Claim 1 and containing as said acid polyacrylic acid, citric acid, succinic acid, tartaric acid, adipic acid, cysteine acid, glutamic acid, benzoic acid or oxalic acid.

4. A laundry additive combination as claimed in any one of Claims 1 to 3 wherein said polyvinyl alcohol, derivative thereof or vinyl alcohol copolymer has a number average molecular weight of about 10,000 and said film includes mannitol as said solubilizer.

7

5. A laundry additive combination as claimed in any preceding claim wherein the polyhydroxy compound or acid is present in the film in an amount of at least 10% by weight of the film.

6. A method of delivering a laundry additive to a laundry wash medium containing borate ions which method comprises contacting with said medium a sealed envelope containing said laundry additive, said envelope being formed of a plasticized film of polyvinyl alcohol, a derivative thereof or a water-soluble copolymer of vinyl alcohol and said contact being effected in the presence of a solubilizer which interacts with the borate ion-containg wash medium to impede the film-insolubilizing effects of said borate ions on said polymer film until said envelope film has dissolved or dispersed and the laundry additive contained therein has been released to the medium, characterized in that (a) said solubilizer is a polyhydroxy compound as defined in Claim 1 and the film is plasticized apart from the presence of said polyhydroxy compound or (b) said solubilizer is an acid as defined in Claim 1, the solubilizer being present as an additive within the material of the plasticized polymer film envelope.

7. A method as claimed in Claim 6 wherein the sealed envelope containing said laundry additive is a laundry additive combination as claimed in any one of Claims 2 to 5.

8. Use of a polyhydroxy compound or acid as defined in Claim 1 as a solubilizer in the film of a sealed plasticized film envelope containing therein a laundry additive and comprising a polyvinyl alcohol, a polyvinyl alcohol derivative or a water-soluble vinyl alcohol copolymer to increase the rate of dissolution or dispersion of said film in a borate ion-containing wash medium by interaction to impede the insolubilizing effects of said borate ions in said wash medium on said film such that 50% or more, by volume, of a 1.5cm x 1.5cm x 0.0038cm piece of said film, when agitated in a volume of 750ml of a solution having a borate concentration of $1.7 \times 10^{-3}M$ and having a PH of 10.7 in a cylindrical container 9.5cm in diameter, using an oblong magnetic stirring bar about 1cm x 5cm at a speed sufficient to cause a vortex to extend about 20% of the way downwardly from a top surface of the solution, has dissolved or dispersed in 300 seconds at a temperature of 37.5°C.

9. Use as claimed in Claim 8 wherein the solubilizer is a polyhydroxy compound as defined in Claim 2 or an acid as defined in Claim 3.

10. Use as claimed in Claim 8 or Claim 9 wherein the film envelope is made of polyvinyl alcohol, a polyvinyl alcohol derivative or a water-soluble vinyl alcohol copolymer having a number average molecular weight of about 10,000 and said film includes mannitol as said solubilizer.

11. Use as claimed in any one of Claims 8 to 10 wherein the polyhydroxy compound or acid is included in the film in an amount of at least 10% by weight of said film.

**Patentansprüche**

1. Eine Waschmittelzusatzkombination, welche einen Waschmittelzusatz zum Austritt in ein Bor-Ionen haltiges Waschmittel, und eine geschlossene Hülle, welche den Zusatzstoff enthält, umfaßt, wobei die Hülle aus einem nachstehend definierten Polymer-Film gebildet ist:
   a) einen Polyvinylalkoholfilm, einen Film eines Derivats eines Polyvinylalkohols oder einen Film eines wasserlöslichen Copolymers von Vinylalkohol, wobei das Polymer unabhängig vom Vorhandensein des nachstehend angegebenen Lösungsmittels plastifiziert wird und als Lösungsvermittler eine Polyhydroxyverbindung, PHC, welche eine Bindungskonstante $K_2$ in wässriger Lösung bei 25°C mit Borat aufweist, die größer als 800 $M^{-2}$ ist, wobei $K_2$ definiert ist als:

$$\frac{\text{(Komplex)}}{\text{(Borat) (PHC)}^2},$$

   worin (Komplex), (Borat) und (PHC) jeweils die molaren Konzentrationen der jeweiligen Bestandteile bedeuten; oder
   b) einem Polyvenylalkoholfilm, einen Film eines Derivats von Polyvinylalkohol oder einem Film eines wasserlöslichen Copolymers von Vinylalkohol, wobei der Polymer-Film plastifiziert wird und als Lösungsvermittler eine Säure enthält, die in Wasser bei 25°C eine Säuredissoziationskontante von größer als etwa $10^{-9}$ M hat, wobei die Zusammensetzung des Films so gewählt wird, daß 50 Vol.-% oder mehr eines 1,5 cm x 1,5 cm x 0,0038 cm großen Stückes des Filmes, wenn es in 750 ml einer eine Boratkonzentration von $1,7 \times 10^{-3}$ M und einen pH-Wert von 10,7 aufweisenden Lösung in einem zylindrischen Gefäß mit 9,5 cm Durchmesser unter Verwendung eines länglichen Magnetrührers mit etwa 1 cm x 5 cm und einer aureichenden Geschwindigkeit, um einen sich etwa 20% der Gesamthöhe in Richtung nach unten der Lösung erstreckenden Wirbel zu bilden, gerührt wird, in 300 s bei 37,5°C gelöst oder dispergiert werden.

2. Eine Waschmittelzusatzkombination nach Anspruch 1, welche als Polyhydroxyverbindung Fructose, Sorbitol, Mannitol, Sorbose, Katechol, Pentaerythritol oder Mesoerythritol enthält.

3. Eine Waschmittelzusatzkombination nach Anspruch 1, welche als Säure Polyacrylsäure, Zitronensäure, Succinsäure, Weinsäure, Adipinsäure, Cysteinsäure, Glutaminsäure, Benzoesäure oder Oxalsäure enthält.

4. Eine Waschmittelzusatzkombination nach einem der Ansprüche 1 - 3, worin der Polyvinylalkohol, das Derivat davon oder das Vinylalkohol Copolymer ein mittleres Molekulargewicht von etwa 10 000 aufweist und der Film Mannitol als Lösungsvermittler enthält.

5. Eine Waschmittelzusaztkombination nach einem der vorhergehenden Patentansprüche, worin die Polyhydroxyverbindung oder Säure zumindest in einer Menge von 10% in dem Film vorhanden ist.

6. Ein Verfahren zur Lieferung eines Waschmittelzusatzes an ein Waschmedium, welches Broat-Ionen enthält, wobei das Verfahren das Kontaktieren einer geschlossenen Hülle, welche den Waschmittelzusatz enthält, mit dem Waschmedium umfaßt, die Hülle aus einem plastifizierten Film, aus Polyvinylalkohol, einem Derivat davon oder einem wasserlöslichen Copolymer aus Vinylalkohol besteht, wobei der Kontakt in Gegenwart eines Lösungsvermittlers, welcher mit dem Borat-Ionen haltigen Waschmedium zusammenwirkt, um die den Polymerfilm unlöslich machenden Effekte der Borat-Ionen auf den Polymerfilm solange zu verhindem, bis der die Hülle bildende Film gelöst oder dispergiert ist und der darin enthaltende Waschmittelzusatz in dem Medium freigesetzt ist, <u>dadurch gekennzeichnet</u>, daß
    a) der Lösungsvermittler eine Polyhydroxyverbindung, wie in Anspruch 1 definiert, darstellt und der Film unabhängig vom Vorhandensein der Polyhydroxyverbindung plastifiziert wird oder
    b) der Lösungsvermittler eine Säure gemäß Anspruch 1 ist, bei der der Lösungsvermittler als Additiv in dem Material der plastifizierten Polymerfilmhülle vorhanden ist.

7. Verfahren nach Anspruch 6, bei dem die geschlossene Hülle, die den Waschmittelzusatz enthält, eine Waschmittelzusatzkombination gemäß einem oder mehreren der Ansprüche 2 bis 5 ist.

8. Verwendung einer Polyhydroxyverbindung oder einer Säure nach Anspruch 1 als Lösungsvermittler im Film einer geschlossenen plastifizierten Filmhülle, die darin einen Waschmittelzusatz mit einem Polyvinylalkohol, einem Polyvinylalkoholderivat oder einem wasserlöslichen Vinylalkohol Copolymer enthält, um die Auflösungsrate oder Dispersion des Films in einem Borat-Ionen enthaltenden Waschmedium durch Interaktion zu verbessern, um die unlöslich machenden Effekte der Borat-Ionen in dem Waschmedium auf den Film soweit zu verhindem, daß mehr als 50 Volumenprozent eines 1,5 cm x 1,5 cm x 0,0038 cm großen Filmstücks in 300 Sekunden bei einer Temperatur von 37,5°C gelöst oder dispergiert werden, wenn es in einem Volumen von 750 ml einer Lösung mit einer Boratkonzentration von $1,7 \times 10^{-3}$ M und einem pH-Wert von 10,7 in einem zylindrischen Gefäß von 9,5 cm Durchmesser unter Verwendung eines länglichen Magnetrührers von etwa 1 cm x 5 cm bei einer Geschwindigkeit gerührt wird, die ausreicht, um einen Wirbel zu erzeugen, der sich etwa 20% des Weges nach unten von der Oberseite der Lösung erstreckt.

9. Verwendung nach Anspruch 8, bei der der Lösungsvermittler eine Polyhydroxyverbindung gemäß Anspruch 2 oder eine Säure gemäß Anspruch 3 ist.

10. Verwendung nach Anspruch 8 oder 9, bei der die Filmhülle aus Polyvinylalkohol, einem Polyvinylalkohol Derivat oder einem wasserlöslichen Vinylalkohol Copolymer mit einem mittleren Molekulargewicht von etwa 10 000 besteht, und der Film Mannitol als Lösungsvermittler enthält.

11. Verwendung nach einem oder mehren der Ansprüche 8 - 10, bei der die Polyhydroxyverbindung oder Säure in dem Film in einem Wert von wenigstens 10 Gewichtsprozent des Films enthalten ist.

EP 0 079 712 B2

## Revendications

1. Une composition à base d'additif de blanchissage, renfermant un additif de blanchissage appelé à être ajouté à un milieu de blanchissage qui renferme des ions de borate, ainsi qu'une enveloppe renfermant ledit additif, cette enveloppe étant constituée par une pellicule à base de polymère consistant en:

(a) une pellicule d'alcool polyvinylique, une pellicule d'un dérivé d'alcool polyvinylique ou une pellicule d'un copolymère d'alcool vinylique soluble dans l'eau, ledit polymère étant plastifié en l'absence de l'agent de solubilisation défini ci-dessous et contenant en tant qu'agent de solubilisation un composé polyhydroxylé, PHC, qui présente une constante de liaison, $K_2$, par rapport au borate, en solution aqueuse à 25°C, supérieure à environ 800 $M^{-2}$, la valeur de $K_2$ étant définie par la formule suivante :

$$\frac{(Complexe)}{(borate)\ (PHC)_2}$$

dans laquelle (complexe), (borate) et (PHC) représentent les concentrations molaires des constituants respectifs; ou

(b) une pellicule d'alcool polyvinylique, une pellicule d'un dérivé d'alcool polyvinylique ou une pellicule d'un copolymère d'alcool vinylique soluble dans l'eau, ledit polymère étant plastifié et renfermant en tant qu'agent de solubilisation un acide dont la constante de dissociation dans l'eau à 25°C est supérieure à environ $10^{-9}$ M;

la composition de ladite pellicule étant telle que 50% au moins, en volume, d'un fragment de ladite pellicule mesurant 1,5 cm x 1,5 cm x 0,0038 cm soit dissous ou dispersé en 300 secondes à une température de 37,5°C, dans 750 cl d'une solution présentant une concentration en borate de 1,7 x $10^{-3}$ M et un pH de 10,7, dans un récipient cylindrique d'un diamètre de 9,5 cm, avec utilisation d'une tige d'agitation magnétique d'environ 1 cm x 5 cm à une vitesse suffisante pour provoquer la formation d'un tourbillon s'étendant sur une distance de 20% vers le bas à partir de la surface de la solution.

2. Une composition d'additif de blanchissage selon la revendication 1, qui renferme en tant que composé polyhydroxylé du fructose, du sorbitol, du mannitol, du sorbose, du catéchol, du penta-érythritol ou du méso-érythritol.

3. Une composition d'additif de blanchissage selon la revendication 1, qui renferme en tant qu'acide, de l'acide polyacrylique, de l'acide citrique, de l'acide succinique, de l'acide tartrique, de l'acide adipique, de l'acide cystéique, de l'acide glutamique, de l'acide benzoïque ou de l'acide oxalique.

4. Une composition d'additif de blanchissage selon l'une quelconque des revendications 1 à 3, dans laquelle ledit alcool polyvinylique, ledit dérivé d'alcool polyvinylique ou ledit copolymère d'alcool vinylique présente un poids moléculaire moyen d'environ 10 000, et dans laquelle ladite pellicule renferme du mannitol en tant qu'agent de solubilisation.

5. Une composition d'additif de blanchissage selon l'une quelconque des revendications précédentes, qui renferme ledit acide ou composé polyhydroxylé dans une proportion d'au moins 10% de ladite pellicule.

6. Un procédé pour introduire dans un milieu de blanchissage renfermant des ions de borate une composition d'additif de blanchissage, qui consiste à mettre en contact ledit milieu de blanchissage avec une enveloppe fermée qui renferme ledit additif de blanchissage, ladite enveloppe étant constitué d'un film plastifié, constitué d'un alcool polyvinylique, d'un dérivé d'alcool polyvinylique ou d'un copolymère d'alcool vinylique soluble dans l'eau, la mise en contact étant effectuée en présence d'un agent de solubilisation qui réagit avec ledit milieu de blanchissage renfermant des ions de borate de manière à contrecarrer les effets d'insolubilisation exercés par lesdits ions de borate sur ladite pellicule polymère jusqu'à la dissolution de cette pellicule formant l'enveloppe et que la composition d'additif de blanchissage contenue dans cette enveloppe soit introduite dans ledit milieu de blanchissage, procédé caractérisé en ce que (a) ledit agent de solubilisation est un composé polyhydroxylé tel que défini dans la revendication 1 et le film est plastifié en l'absence dudit composé polyhydroxylé ou (b) ledit agent de solubilisation est un acide tel que défini dans la revendication 1, l'agent solubilisant étant présent en tant qu'additif dans le matériau formant ladite enveloppe en substance polymère plastifiée.

7. Procédé selon la revendication 6, dans lequel l'enveloppe fermée contenant ledit additif de blanchissage est une composition d'additif de blanchissage selon l'une quelconque des revendications 2 à 5.

8. Utilisation d'un composé polyhydroxylé ou d'un acide tel que défini dans la revendication 1, en tant qu'agent de solubilisation dans la pellicule de ladite enveloppe pelliculaire, fermée, plastifiée contenant un additif de blanchissage et comprenant un alcool polyvinylique, un dérivé d'alcool polyvinylique ou bien un copolymère d'alcool vinylique soluble dans l'eau afin d'augmenter le taux de dissolution ou de dispersion de ladite pellicule dans un milieu de blanchissage contenant des ions borate dans lequel suite aux interactions mises en jeu, les effets d'insolubilisation desdits ions borate sur ladite pellicule sont contrecarrés de telle sorte que 50% en volume ou plus du fragment de ladite pellicule mesurant 1,5 cm x 1,5 cm x 0,0038 cm soit dissous ou dispersé en 300s à une température de 37,5°C dans 750 cl d'une solution présentant une concentration en borate de $1,7 \times 10^{-3}$ M et ayant un pH de 10,7 dans un récipient cylindrique d'un diamètre de 9,5 cm avec utilisation d'une tige d'agitation magnétique d'environ 1,5 cm x 5 cm à une vitesse suffisante pour provoquer la formation d'un vortex s'étendant sur une distance de 20% vers le bas à partir de la surface de la solution.

9. Utilisation selon la revendication 8, dans laquelle l'agent de solubilisation est un composé polyhydroxylé tel que défini dans la revendication 2 ou un acide tel que défini dans la revendication 3.

10. Utilisation selon la revendication 8 ou la revendication 9, dans laquelle l'enveloppe pelliculaire est formée d'un alcool polyvinylique, d'un dérivé d'alcool polyvinylique ou bien d'un copolymère d'alcool vinylique soluble dans l'eau présentant une masse moléculaire moyenne en nombre d'environ 10.000 et ladite pellicule comprenant du mannitol en tant qu'agent de solubilisation.

11. Utilisation selon l'une quelconque des revendications 8 à 10, dans laquelle le composé polyhydroxylé ou l'acide est compris dans la pellicule dans une quantité au moins égale à 10% en poids de ladite pellicule.